(19) Europäisches Patentamt
European Patent Office
Office européen des brevets

(11) **EP 2 918 467 A1**

(12) **EUROPEAN PATENT APPLICATION**
published in accordance with Art. 153(4) EPC

(43) Date of publication:
**16.09.2015 Bulletin 2015/38**

(51) Int Cl.:
**B60W 30/08** (2012.01)　　**B60T 7/12** (2006.01)

(21) Application number: **12888174.5**

(86) International application number:
**PCT/JP2012/079027**

(22) Date of filing: **08.11.2012**

(87) International publication number:
**WO 2014/073080 (15.05.2014 Gazette 2014/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **TOYOTA JIDOSHA KABUSHIKI KAISHA**
**Toyota-shi, Aichi-ken, 471-8571 (JP)**

(72) Inventors:
• **YOSHIZAWA Shintaro**
**Toyota-shi**
**Aichi 471-8571 (JP)**

• **KIKUCHI Hirokazu**
**Toyota-shi**
**Aichi 471-8571 (JP)**
• **KISHI Hiroshi**
**Toyota-shi**
**Aichi 471-8571 (JP)**
• **NGUYEN VAN Quy Hung**
**Toyota-shi**
**Aichi 471-8571 (JP)**

(74) Representative: **D Young & Co LLP**
**120 Holborn**
**London EC1N 2DY (GB)**

(54) **DRIVE ASSIST DEVICE AND METHOD, COLLISION PREDICTION DEVICE AND METHOD, AND ALERTING DEVICE AND METHOD**

(57)　A drive assist device includes: an approach degree calculator configured to calculate a first approach degree of a vehicle to an object in a vehicle traveling direction and to calculate a second approach degree of the vehicle to the object in a direction that intersects the vehicle traveling direction based on a relative velocity between the vehicle and the object; and a drive assist control unit configured to control execution of drive assist based on the first approach degree and the second approach degree.

Fig.3

EP 2 918 467 A1

**Description**

**Technical Field**

The present invention relates to a drive assist device and a method thereof, a collision prediction device and a method thereof, and an alerting device and a method thereof.

**Background Art**

In the related art, as a technique relating to a drive assist device and a method thereof, a collision prediction device and a method, and an alerting device and a method, as disclosed in Japanese Unexamined Patent Application Publication No. 2008-308024, a technique that reduces the influence of a collision based on a possibility that a vehicle and an object collide with each other is known.

**Citation List**

**Patent Literature**

[Patent Literature 1] Japanese Unexamined Patent Application Publication No. 2008-308024

**Summary of Invention**

**Technical Problem**

With respect to the related art technique, the present inventors have reviewed a technique that performs drive assist, collision prediction and alerting based on a first time taken for arrival of a vehicle at a point where a path of the vehicle and a path of an object intersect each other and a second time taken for arrival of the object at the intersection point. The first time is a value obtained by dividing a distance from the vehicle to the intersection point by a velocity of the vehicle, and the second time is a value obtained by dividing a distance from the object to the intersection point by a velocity of the object.

In this regard, in the drive assist, the collision prediction or the alerting, execution of operations according to various movements of the object such as a stop state, or a change from the stop state to an advancing state or to a crossing state, for example, is necessary. However, when using above-mentioned times taken for arrival, in a state where the velocity of the object is almost zero, it may be difficult to appropriately ascertain the various movements of the object, and it may be impossible or difficult to execute the operations according to the movements of the object without giving a driver an uncomfortable feeling.

Here, an object of the invention is to provide a drive assist device and a method thereof, a collision prediction device and a method thereof, and an alerting device and a method thereof capable of executing drive assist, collision prediction or alerting according to movement of an object without giving a driver an uncomfortable feeling.

**Solution to Problem**

According to an aspect of the invention, there is provided a drive assist device including: an approach degree calculator configured to calculate a first approach degree of a vehicle to an object in a vehicle travel direction based on a movement state of a vehicle and an object and to calculate a second approach degree of the vehicle to the object in a direction that intersects the vehicle travel direction based on a relative velocity between the vehicle and the object; and a drive assist control unit configured to control execution of drive assist based on the first approach degree and the second approach degree.

According to this drive assist device, the drive assist is executed based on the second approach degree in the direction that intersects the vehicle travel direction, calculated based on the relative velocity between the vehicle and the object. Thus, it is possible to ascertain the movement of the object even in a state where the velocity of the object is almost zero as described above. Accordingly, it is possible to appropriately ascertain various movements of the object, and to execute the drive assist according to the movement of the object without giving a driver an uncomfortable feeling.

Further, the second approach degree may be a value calculated based on a relative distance between the vehicle and the object in the direction that intersects the vehicle travel direction and the relative velocity between the vehicle and the object.

Further, the second approach degree may be a value obtained by dividing the relative distance between the vehicle and the object in the direction that intersects the vehicle travel direction by the relative velocity between the vehicle and the object.

Further, the first approach degree may be a value obtained by dividing the relative distance between the vehicle and the object in the vehicle travel direction by the relative velocity between the vehicle and the object.

Further, the first approach degree may be a component value in the vehicle travel direction in a relative approach degree obtained by dividing the relative distance between the vehicle and the object by the relative velocity between the vehicle and the object, and the second approach degree may be a component value in the direction that intersects the vehicle travel direction in the relative approach degree.

Further, the first approach degree may be a time taken for arrival of the vehicle at a point where a path of the vehicle and a path of the object intersect each other.

Further, the first approach degree may be a value obtained based on at least one of the relative distance, the relative velocity, a relative acceleration or a relative jerk between the vehicle and the object.

Further, the drive assist control unit may control the execution of the drive assist by applying the first approach degree and the second approach degree to a predetermined map.

Further, the drive assist control unit may control the execution of the drive assist based on a risk obtained based on the first approach degree, the second approach degree, and at least one of the relative distance, the relative velocity, a relative acceleration or a relative jerk between the vehicle and the object.

Further, the drive assist control unit may control the execution of the drive assist by applying the first approach degree, the second approach degree and the risk to a predetermined map.

Further, the drive assist control unit may estimate an operation timing of a specific driving operation for changing the velocity or acceleration of the vehicle based on the first approach degree and the second approach degree.

Further, the drive assist control unit may estimate an operation timing of a specific driving operation for changing the velocity or acceleration of the vehicle based on the first approach degree, the second approach degree and the risk.

Further, the drive assist control unit may control the execution of the drive assist based on the operation timing or an operation amount of the specific driving operation. The specific driving operation may be an accelerator operation or a brake operation, and may be an accelerator-off operation or a brake-on operation. Further, the specific driving operation may be an accelerator-off operation amount or a brake operation amount that is designated in advance.

According to another aspect of the invention, there is provided a drive assist method including: calculating a first approach degree of a vehicle to an object in a vehicle travel direction and calculating a second approach degree of the vehicle to the object in a direction that intersects the vehicle travel direction based on a relative velocity between the vehicle and the object; and controlling execution of drive assist based on the first approach degree and the second approach degree.

According to still another aspect of the invention, there is provided a collision prediction device including: an approach degree calculator configured to calculate a first approach degree of a vehicle to an object in a vehicle travel direction and to calculate a second approach degree of the vehicle to the object in a direction that intersects the vehicle travel direction based on a relative velocity between the vehicle and the object; and a collision prediction unit configured to perform collision prediction of the vehicle and the object based on the first approach degree and the second approach degree.

According to still another aspect of the invention, there is provided a collision prediction method including: calculating a first approach degree of a vehicle to an object in a vehicle travel direction and calculating a second approach degree of the vehicle to the object in a direction that intersects the vehicle travel direction based on a relative velocity between the vehicle and the object; and performing collision prediction of the vehicle and the object based on the first approach degree and the second approach degree.

According to the collision prediction device and the collision prediction method, the collision prediction of the vehicle and the object is performed based on the second approach degree in the direction that intersects the vehicle travel direction, calculated based on the relative velocity between the vehicle and the object. Thus, it is possible to ascertain the movement of the object even in a state where the velocity of the object is almost zero as described above. Accordingly, it is possible to appropriately ascertain various movements of the object, and to perform the collision prediction according to the movement of the object without giving the driver an uncomfortable feeling.

According to still another aspect of the invention, there is provided an alerting device including: an approach degree calculator configured to calculate a first approach degree of a vehicle to an object in a vehicle travel direction and to calculate a second approach degree of the vehicle to the object in a direction that intersects the vehicle travel direction based on a relative velocity between the vehicle and the object; and an alerting unit configured to alert outside of the vehicle to a traveling state of the vehicle based on the first approach degree and the second approach degree.

According to still another aspect of the invention, there is provided an alerting method including: calculating a first approach degree of a vehicle to an object in a vehicle travel direction and calculating a second approach degree of the vehicle to the object in a direction that intersects the vehicle travel direction based on a relative velocity between the vehicle and the object; and alerting outside of the vehicle to a traveling state of the vehicle based on the first approach degree and the second approach degree.

According to the alerting device and method, the collision prediction of the vehicle and the object is performed based on the second approach degree in the direction that intersects the vehicle travel direction, calculated based on the relative velocity between the vehicle and the object. Thus, it is possible to ascertain the movement of the object even in a state where the velocity of the object is almost zero as described above. Accordingly, it is possible to appropriately ascertain various movements of the object, and to perform the collision prediction according to the movement of the object without giving a driver an uncomfortable feeling.

**Advantageous Effects of Invention**

According to the invention, it is possible to provide a drive assist device and a method thereof, a collision prediction device and a method thereof, and an alerting device and a method thereof capable of executing drive assist according to movement of an object without giving a driver an uncomfortable feeling.

**Brief Description of Drawings**

FIG. 1 is a block diagram illustrating a drive assist device according to a first embodiment of the invention.
FIG. 2 is a diagram illustrating a method for calculating first and second approach degrees and a time taken for arrival.
FIG. 3 is a flowchart illustrating a drive assist method according to the first embodiment of the invention.
FIG. 4 is a flowchart illustrating a map setting process.
FIG. 5 is a diagram illustrating an example of a movement state of an object.
FIG. 6 is a diagram illustrating an example of a drive characteristic in a stop state.
FIG. 7 is a diagram illustrating an example of a drive characteristic in a shift state to an advancing state.
FIG. 8 is a diagram illustrating an example of a drive characteristic in a shift state to a crossing state.
FIG. 9 is a diagram illustrating an example of a drive assist map.
FIG. 10 is a diagram illustrating setting of coordinate axes of the second approach degree.
FIG. 11 is a flowchart illustrating an assist execution process.
FIG. 12 is a diagram illustrating a determination example of the occurrence of an operation event.
FIG. 13 is a diagram illustrating an example of a drive assist map used in a second embodiment.
FIG. 14 is a diagram illustrating a method for calculating a second approach degree and a time taken for arrival.
FIG. 15 is a diagram illustrating an example of a drive assist map used in a third embodiment.

**Description of Embodiments**

Hereinafter, a drive assist device and a method thereof, a collision prediction device and a method thereof, and an alerting device and a method thereof according to embodiments of the invention will be described in detail with reference to the accompanying drawings. The same reference numerals are given to the same components in the description of the drawings, and description thereof will not be repeated.

The drive assist device and method are a device and a method for performing drive assist for avoiding collision between a vehicle and an object. The drive assist device and method have aspects as a device and a method for predicting collision or executing alerting of collision to avoid a collision between the vehicle and an object. The object refers to a movable object for which there is a possibility of collision with the vehicle, such as a pedestrian or a bicycle.

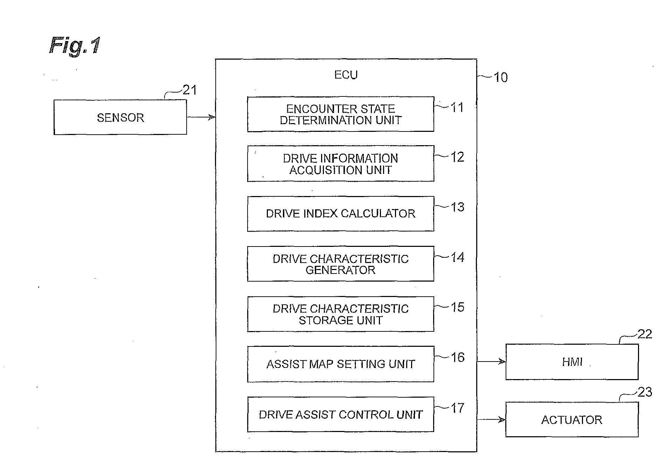

First, a drive assist device and a drive assist method according to a first embodiment of the invention will be described with reference to FIGS. 1 to 12. FIG. 1 is a block diagram illustrating the drive assist device according to the first embodiment of the invention.

As shown in FIG. 1, the drive assist device includes, as a main configuration, an electronic control unit (hereinafter, briefly referred to as an ECU) that is mounted on a vehicle and mainly performs a drive assist process. A sensor 21 such as a radar sensor, an image sensor, a vehicle velocity sensor, a steering angle sensor, an accelerator sensor, or a brake sensor, for example, is connected to an ECU 10. Further, a human machine interface (HMI) 22 such as a monitor, a speaker, a vibrator, or a buzzer, and an actuator 23 such as a brake actuator, a steering actuator, or a seat belt actuator are connected to the ECU 10, for example.

The radar sensor is a sensor that detects an object around the vehicle using electromagnetic waves, and for example, is a millimeter wave radar, a laser radar, or the like. The image sensor is a sensor that detects an object around the vehicle using an image, and for example, is a stereo camera, a video camera, or the like. The vehicle velocity sensor is a sensor that detects the velocity of the vehicle, and the steering angle sensor is a sensor that detects a steering angle of a steering operation. The accelerator sensor is a sensor that detects an operation amount of an accelerator pedal, and the brake sensor is a sensor that detects an operation amount of a brake pedal.

The HMI 22 is used to execute alerting assist for alerting a travel state or the like of the vehicle using visual information, auditory information, tactile information, or the like to a driver of the vehicle. The actuator 23 is used to execute safety assist for control assist for avoiding collision by controlling a braking device, a steering device or a seat belt device.

The ECU 10 includes an encounter state determination unit 11, a drive information acquisition unit 12, a drive index calculator 13, a drive characteristic generator 14, a drive characteristic storage unit 15, an assist map setting unit 16, and a drive assist control unit 17. The ECU 10 is configured by a CPU, a ROM, a RAM, and the like which are main components, and realizes functions of the encounter state determination unit 11, the drive information acquisition unit 12, the drive index calculator 13, the drive characteristic generator 14, the drive characteristic storage unit 15, the assist map setting unit 16, and the drive assist control unit 17 by executing a program by the CPU. The functions of the encounter state determination unit 11, the drive information acquisition unit 12, the drive index calculator 13, the drive characteristic generator 14, the drive characteristic storage unit 15, the assist map setting unit 16, and the drive assist control unit 17 may be realized by two or more ECUs.

The encounter state determination unit 11 determines an encounter state of the vehicle and the object. The encounter state determination unit 11 determines the presence or absence of the encountering of the object, the type of the object, a positional relationship with the object, a driving environment during an encounter, a movement state of the object, and the like based on detection results of various sensors 21 or calculating result of a drive index described later.

As for the type of the object, for example, distinction between a pedestrian and a bicycle, distinction regarding whether the pedestrian or a rider of the bicycle is an adult or a child, or the like is determined. As the positional relationship with the object, a positional relationship between the vehicle and the object at a time point when the vehicle and the object encounter each other in a vehicle travel direction and in a direction that intersects the vehicle travel direction is determined. Here, it is assumed that the direction that intersects the vehicle travel direction includes a vehicle width direction, and a direction that obliquely intersects the vehicle travel. As the driving environment during an encounter, for example, a surrounding environment (weather, time zone, temperature, room temperature or the like), a speed limit on a travel lane, a road line shape, a road structure or the like is determined. As the movement state of the object, for example, a state where the object stops (stop state), a state where the object advances with the vehicle (advancing state), a state where the object crosses in front of the vehicle (crossing state) or the like is determined.

The drive information acquisition unit 12 acquires drive information when encountering the object. The drive information acquisition unit 12 acquires movement information indicating a relative movement state between the vehicle and the object and operation information indicating the occurrence of an operation event by the driver, based on detection results of the various sensors 21.

As the movement information, the velocities of the vehicle and the object, a relative distance, a relative velocity, a relative acceleration and a relative jerk (a differential value of the relative acceleration) between the vehicle and the object are obtained. Similarly, a relative distance, a relative velocity, a relative acceleration and a relative jerk in the vehicle travel direction or in the direction that intersects the vehicle travel direction are obtained. As the operation information, for example, an operation event such as an accelerator operation, a brake operation or a steering operation, particularly, an operation timing and an operation amount of an accelerator-off operation and a brake-on operation are obtained.

The drive index calculator 13 calculates drive indexes when encountering the object. The drive index calculator 13 also functions as an approach degree calculator that calculates a first approach degree A1 in the vehicle travel direction based on a movement state of the vehicle with respect to the object and calculates a second approach degree A2 in the direction that intersects the vehicle travel direction based on the relative velocity between the vehicle and the object. Here, it is assumed that the direction that intersects the vehicle travel direction includes a vehicle width direction and a direction that obliquely intersects the vehicle travel.

In the present embodiment, as the drive indexes, the first and second approach degrees A1 and A2 indicating the approach degrees of the vehicle with respect to the object, a risk R indicating the degree of collision risk between the vehicle and the object, and a time TTC taken for arrival are calculated.

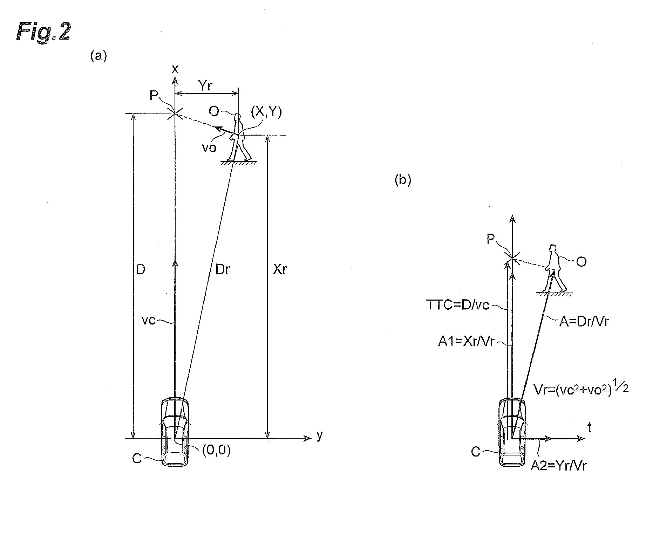

FIG. 2 is a diagram illustrating a method for calculating the first and second approach degrees and the time taken for arrival. FIG. 2 shows an example (a) of a movement state of a vehicle C and an object O, and calculation results (b) of the first and second approach degrees A1 and A2 and the time taken for arrival.

In the example shown in (b) of FIG. 2, the movement states of the vehicle C and the object O are expressed on a coordinate plane where the vehicle travel direction is represented on an x-axis and the direction that intersects the vehicle travel direction is represented on a y-axis. Since the vehicle C is located at (0, 0) and the object O is located at (X, Y), a relative distance in the vehicle travel direction is Xr=X, a relative distance in the direction that intersects the vehicle travel direction is Yr=Y, and a relative distance between the vehicle C and the object O is $Dr=(Xr^2+Yr^2)^{1/2}$. Further, since the vehicle C travels at a velocity of vc and the object O moves at a velocity of vo, a relative velocity between the vehicle C and the object O is $Vr=(vc^2+vo^2)^{1/2}$.

Thus, as shown in (b) of FIG. 2, a relative approach degree A between the vehicle C and the object O is calculated as a value Dr/Vr obtained by dividing the relative distance Dr between the vehicle C and the object O by the relative velocity Vr. The first approach degree A1 is calculated as a value Xr/Vr obtained by dividing the relative distance Xr in the vehicle travel direction by the relative velocity Vr. The second approach degree A2 is calculated as a value Yr/Vr obtained by dividing the relative distance Yr in the direction that intersects the vehicle travel direction by the relative velocity Vr. The first approach degree A1 is also a first time indicating the approach degree of the vehicle C and the object O in the vehicle travel direction, and the second approach degree A2 is also a second time indicating the approach degree of the vehicle C and the object O in the direction that intersects the vehicle travel direction.

The approach degrees A1 and A2 may be obtained by dividing the relative approach degree A into a component in the vehicle travel direction and a component in the direction that intersects the vehicle travel direction and calculating the component in the direction that intersects the vehicle travel direction as the first approach degree A1, and the component in the direction that intersects the vehicle travel direction as the second approach degree A2. Further, the approach degrees A1 and A2 may be obtained by dividing the relative velocity Vr into a component in the vehicle travel direction and a component in the direction that intersects the vehicle travel direction and calculating a value obtained by dividing the relative distance Xr by the component of the relative velocity Vr in the vehicle travel direction as the approach degree A1, and a value obtained by dividing the relative distance Yr by the component of the relative velocity Vr in the direction that intersects the vehicle travel direction as the approach degree A2.

Further, in the example shown in (a) of FIG. 2, a path of the vehicle C and a path of the object O intersect each other at a point P, and a distance from the vehicle C to the intersection point P is D. Thus, as shown in (b) of FIG 2, the time TTC taken for arrival is calculated as TTC=D/vc obtained by dividing the distance D from the vehicle C to the intersection point P by the vehicle velocity vc of the vehicle C. The time TTC taken for arrival is also the first time indicating the approach degree of the vehicle C and the object O in the vehicle travel direction.

Here, the first and second approach degrees A1 and A2 are calculated based on the relative distance Dr and the relative velocity Vr between the vehicle and the object. Accordingly, the first and second approach degrees A1 and A2 can be calculated even in a state where the point P where the path of the vehicle and the path of the object intersect each other is not present, and the second approach degree A2 can be calculated even in a state where the velocity of the object is almost zero.

The risk R is an index indicating the degree of collision risk between the vehicle and the object based on a model indicating a temporal change in the relative distance, the relative velocity, the relative acceleration or the relative jerk between the vehicle and the object. For example, an acceleration model is shown in Formula (1), and a jerk model is shown in Formula (2). In the formulas, Dr represents a relative distance, Vr represents a relative velocity ($Vr=(Dr)_t$), $\alpha$, $\beta$, $\gamma$, and n represent specific parameters of a driver, $(\cdot)_t$ represents first-order differentiation with respect to time, $(\cdot)_{tt}$ represents second-order differentiation with respect to time, and $Dr^n$ represents the n-th power of the relative velocity Dr.

$$\text{Acceleration model} = (\alpha \cdot Vr + \beta \cdot (Vr)_t)/Dr^n \quad \dots (1)$$

$$\text{Jerk model} = (\alpha \cdot Vr + \beta \cdot (Vr)_t + \gamma \cdot (Vr)_{tt})/Dr^n \dots (2)$$

In a situation where a constant risk R is maintained, the model (2) is considered as a non-linear spring model expressed as a type of Lienard's equation. The models are calculated in advance by identifying the specific parameters (for example, $\alpha$, $\beta$, and n in Formula (1), and $\alpha$, $\beta$, $\gamma$, and n in Formula (2)) using movement information for each driver.

The drive characteristic generator 14 generates drive characteristics of the driver when encountering the object. The drive characteristic generator 14 generates the drive characteristics of the driver during an encounter based on the drive indexes and the operation information. The drive characteristics represent characteristics of a drive operation that is normally performed by the driver when encountering the object.

The drive characteristics include an approach characteristic which is a characteristic based on the relationship between the approach degrees A1 and A2 and the operation information. The approach characteristic is a characteristic in which the first and second approach degrees A1 and A2 and the operation information are associated based on elapsed time during an encounter, and represents how an operation event occurs according to the change in the approach degree. Further, the drive characteristics include a risk characteristic which is a characteristic based on the relationship between the risk R and the operation information. The risk characteristic is a characteristic in which the risk R and the operation information are associated based on the elapsed time during an encounter, and represents how the operation event occurs according to the change in the collision risk degree.

The drive characteristic storage unit 15 stores the drive characteristics of the driver when encountering the object. The drive characteristic storage unit 15 stores the drive characteristics in association with the encounter state with respect to the object, and rejects an inappropriate drive characteristic. The drive characteristics are stored for setting a drive assist map which will be described later.

The assist map setting unit 16 sets the drive assist map used for drive assist when encountering the object. The assist map setting unit 16 statistically processes the stored drive characteristics to set the drive assist map. The drive assist map is used for estimating the occurrence of an operation event during an encounter.

The drive assist control unit 17 controls execution of the drive assist when encountering the object. The drive assist control unit 17 controls the execution of the drive assist based on the first and second approach degrees A1 and A2. The drive assist control unit 17 applies current values of the drive indexes to the drive assist map to control the execution of the drive assist. In the present embodiment, the first and second approach degrees A1 and A2, and the risk R are applied to the drive assist map.

The drive assist control unit 17 estimates the occurrence of the operation event using the drive assist map. The drive assist control unit 17 determines whether a corresponding operation event occurs at a timing when the operation event is normally performed by the driver based on the detection results of the various sensors 21, to control the execution of the drive assist. Instead of the normal timing, the drive assist control unit 17 may determine whether the operation event occurs at an ideal timing in the drive operation. When the estimated operation event does not occur at the normal timing, the drive assist control unit 17 executes the drive assist. Further, when the vehicle is in a state before a dangerous state, the drive assist control unit 17 performs pre-assist for alerting of the possibility of occurrence of a dangerous state, and when the vehicle is in the dangerous state, the drive assist control unit 17 performs a main assist for avoiding the dangerous state.

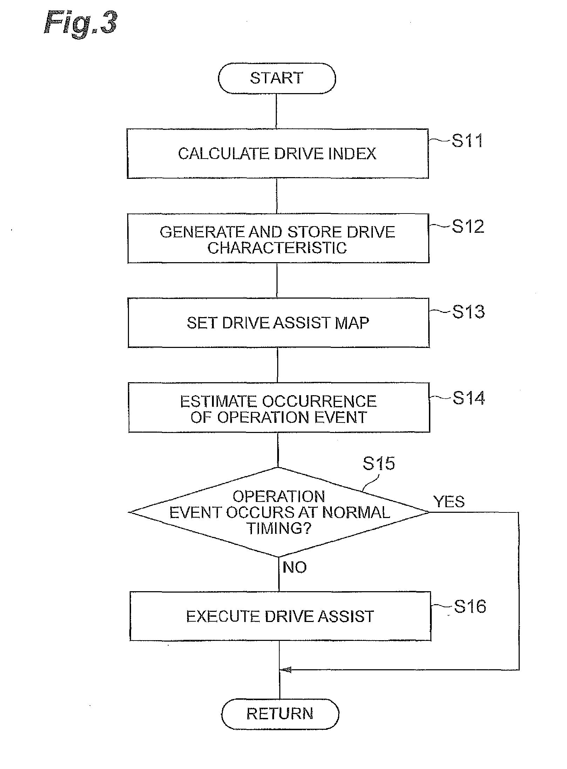

FIG. 3 is a flowchart illustrating a drive assist method according to a first embodiment of the invention. As shown in FIG. 3, the drive assist method is divided into a map setting process and an assist execution process. In the following description, the map setting process and the assist execution process are separately described, but the map setting process and the assist execution process may be performed in parallel.

As shown in FIG. 3, in the map setting process, the drive indexes including the first and second approach degrees A1 and A2 and the risk R are calculated based on the movement information (S11). The drive indexes are associated with the operation information, so that drive characteristics are generated and stored (S12). Then, the drive assist map is set based on the stored drive characteristics (S13).

In the assist execution process, drive indexes at a current time point are applied to the drive assist map that is set in advance by the map setting process to estimate the occurrence of the operation event (S 14). It is determined whether the estimated operation event occurs at the normal timing based on the operation information (S15). When it is not determined that the operation event occurs at the normal timing, the drive assist is executed (S16).

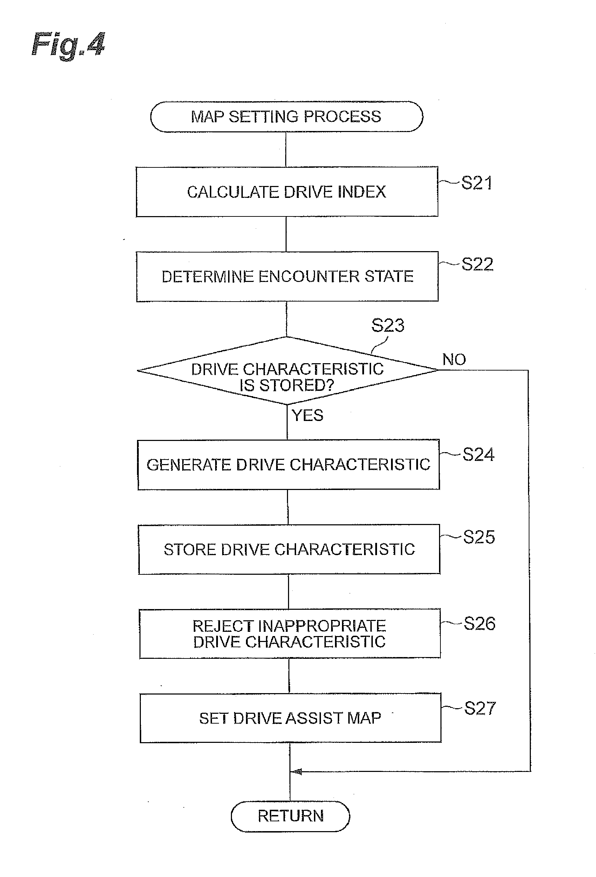

First, the map setting process will be described with reference to FIGS. 4 to 10. FIG. 4 is a flowchart illustrating the map setting process. FIG. 4 shows details of the processes of S11 to S13 in FIG. 3.

The map setting process is executed when an encounter state suitable for storage of the drive characteristics occurs. The encounter state suitable for storage of the drive characteristics means an encounter state where visibility of a host vehicle lane up to 80 m in front of the vehicle is good and a driver can visually recognize an object in a range of 3 m on the left side of the host vehicle lane and 4 m on the right side thereof, for example.

When the map setting process is started, as shown in FIG. 4, the drive information acquisition unit 12 acquires drive information, and the drive index calculator 13 calculates the drive indexes based on the drive information (S21). The drive index calculator 13 calculates the first and second approach degrees A1 and A2 indicating the approach degrees of the vehicle to the object, the risk R indicating the degree of collision risk between the vehicle and the object, and the time TTC taken for arrival, based on the movement information.

When encountering the object, the driver senses by perceiving a relative approach degree between the vehicle and the object, and approaches the object while perceiving a change in a component of the relative approach degree in the vehicle travel direction and a change in a component thereof in the direction that intersects the vehicle travel direction. Thus, the first and second approach degrees A1 and A2 may be referred to as indexes that reflect sensory characteristics of the driver during an encounter.

Further, the driver senses by perceiving the relative approach degree between the vehicle and the object, and performs the drive operation while keeping the collision risk at a level suitable for the driver's driving skill. Thus, it can be said that the risk R is an index that strongly reflects characteristics of sensory perception of the driver compared with the approach degrees and can be used for stably detecting the drive characteristics of the driver. Particularly, the acceleration model is an index having a high correlation with a timing of an accelerator operation or a brake operation of changing the velocity of the vehicle, and the jerk model is an index with a high correlation with movement of an object that causes an acceleration change in the vehicle.

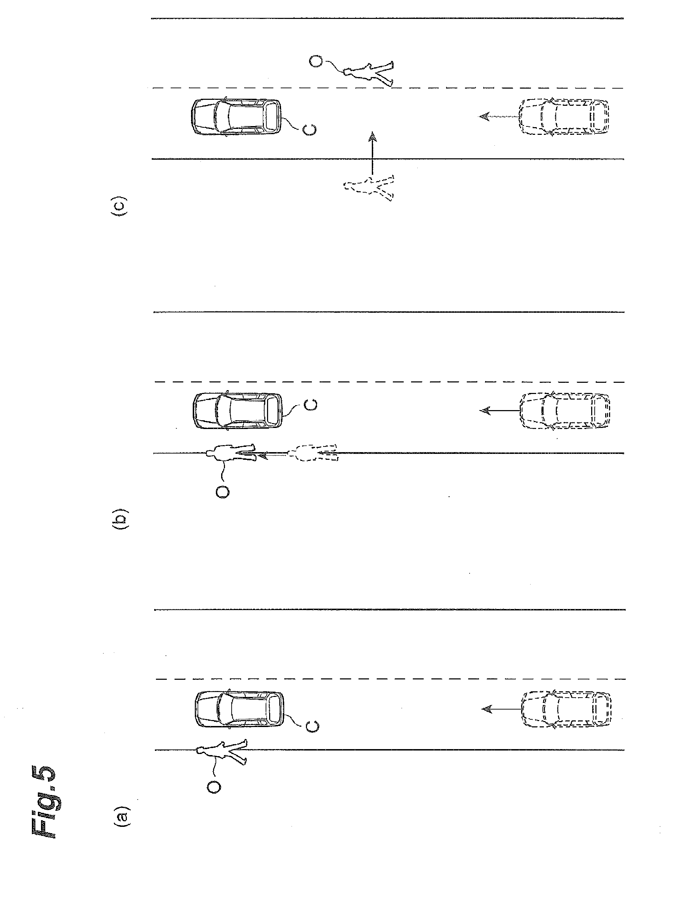

FIG. 5 is a diagram illustrating an example of a movement state of an object. FIG. 5 shows a movement state in a stop state, a shift state to an advancing state, and a shift state to a crossing state. As shown in (a) of FIG. 5, the stop state refers to a state where an object O stops on a roadside of a host vehicle lane. The shift state to the advancing state refers to a state where the object O that stops on the roadside of the host vehicle lane shifts from the stop state to the advancing state, as shown in (b) of FIG. 5. The shift state to the crossing state refers to a state where the object O that stops (several meters from a road shoulder) on the roadside of the host vehicle lane shifts from the stop state to the crossing state, as shown in (c) of FIG. 5.

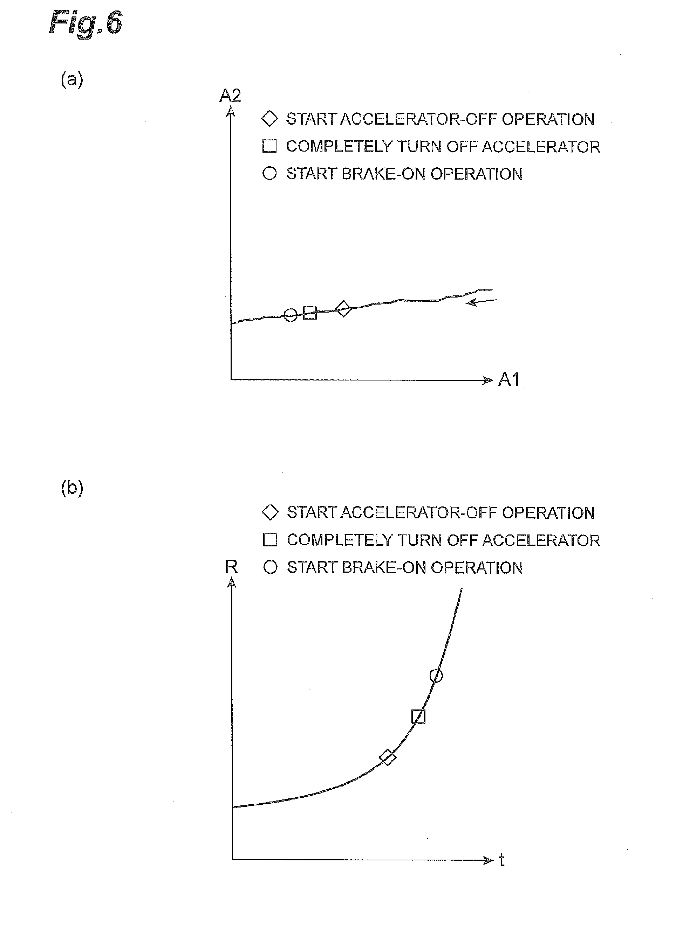

FIGS. 6 to 8 are diagrams illustrating examples of driving characteristics in different movement states of an object. In FIGS. 6 to 8, an approach characteristic (a) obtained by associating the first and second approach degrees A1 and A2 with the operation information, and a risk characteristic (b) obtained by associating the risk R expressed by the jerk model with the operation information are shown. In FIGS. 6 to 8, changes in a longitudinal direction are emphasized for display compared with changes in a transverse direction.

FIG. 6 shows an example of the drive indexes in the stop state. In the stop state, the vehicle approaches the object that stops on the roadside of the host vehicle lane. As shown in (a) of FIG. 6, the first approach degree A1 gradually decreases while the second approach degree A2 slightly decreases. Further, as shown in (b) of FIG 6, the risk R gradually increases.

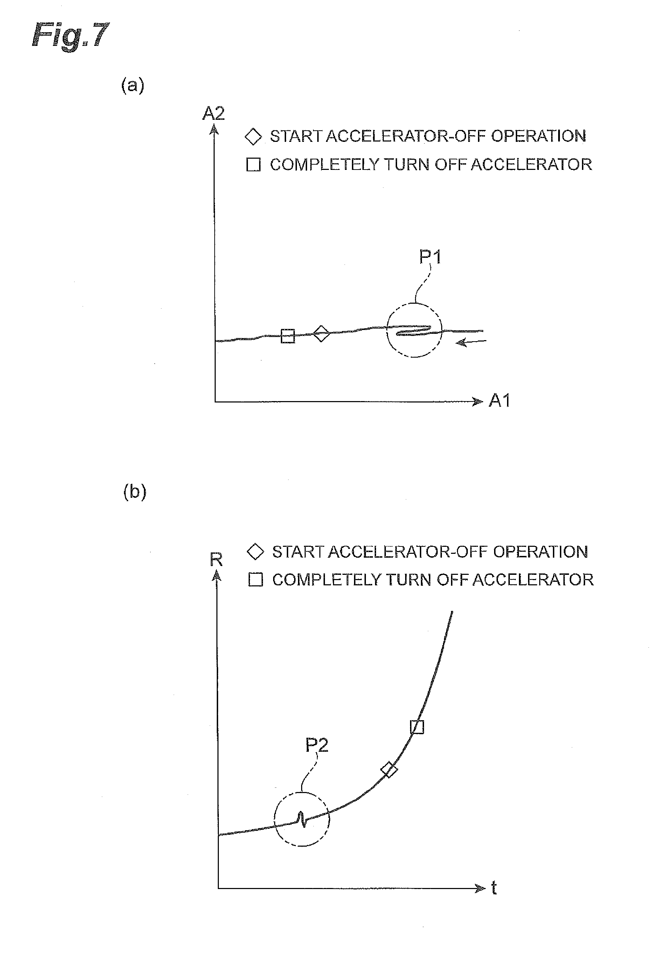

FIG. 7 shows an example of the drive indexes in the shift state to the advancing state. In the shift state to the advancing state, the state of the object that stops on the roadside of the host vehicle lane shifts from the stop state to the advancing state. As shown in (a) of FIG. 7, the first approach degree A1 gradually decreases in a state where the second approach degree A2 is approximately constant, increases temporarily according to the shift to the advancing state, and then, gradually decreases again. Further, as shown in (b) of FIG. 7, the risk R gradually increases, temporarily increases according to the shift to the advancing state and decreases again, and then, gradually increases. Here, a phenomenon P1 in which the first approach degree A1 increases temporarily, or a phenomenon P2 in which the risk R temporarily increases is a sign indicating the shift to the advancing state.

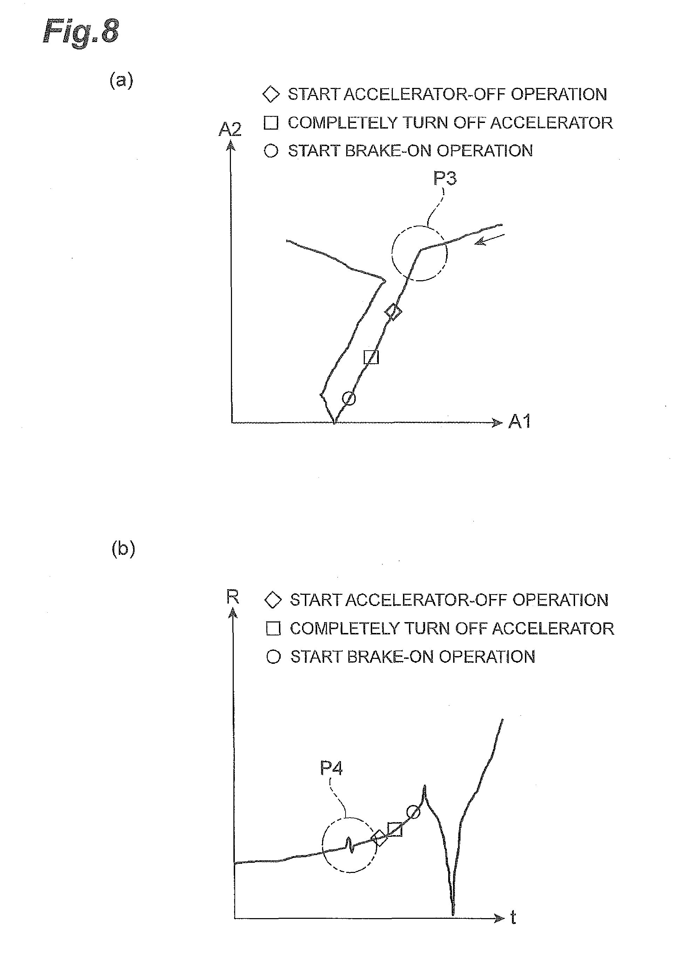

FIG. 8 shows an example of the drive indexes in the shift state to the crossing state. In the shift state to the crossing state, the state of the object that stops on the roadside of the host vehicle lane shifts from the stop state to the crossing state. As shown in (a) of FIG. 8, the first approach degree A1 decreases while the second approach degree A2 decreases. Further, the first and second approach degrees A1 and A2 rapidly decrease according to the shift to the crossing state, and then, greatly increase again. Further, as shown in (b) of FIG. 8, the risk R gradually increases, temporarily increases according to the shift to the crossing state and decreases, and then, gradually increases. Then, the risk R rapidly decreases after the object finishes the crossing. Here, a phenomenon P3 in which the first and second approach degrees A1 and A2 rapidly decrease or a phenomenon P4 in which the risk R temporarily increases is a sign indicating the shift to the crossing state.

Returning to the description of FIG. 4, the encounter state determination unit 11 determines an encounter state with respect to the object when calculating the drive indexes (S22). The encounter state determination unit 11 determines the type of the object, the positional relationship with the object, and the driving environment during an encounter based on the detection results of the various sensors 21, and determines the movement state of the object based on the sign included in the drive indexes. In the examples of the drive indexes shown in FIGS. 6 to 8, the stop state of the object, the shift to the advancing state, and the shift to the crossing state are determined as the movement states of the object. The type of the object, the positional relationship with the object, and the driving environment during an encounter may be determined at a time point when encountering the object.

When the encounter state with respect to the object is determined, the drive characteristic storage unit 15 determines whether the drive characteristics are stored (S23). For example, when the estimation accuracy of the occurrence of the operation event based on the drive assist map does not reach a predetermined level, the drive characteristic storage unit 15 determines that the drive characteristics are stored.

When it is determined that the drive characteristics are stored, the drive characteristic generator 14 generates the drive characteristics based on the drive indexes and the operation information (S24). The drive characteristic generator 14 generates an approach characteristic indicating the relationship between the first and second approach degrees A1 and A2 and the occurrence of the operation event, and a risk characteristic indicating the relationship between the risk R and the occurrence of the operation event.

FIG. 6 shows an example of the drive characteristics in the stop state. According to the drive characteristics, the driver sequentially starts an accelerator-off operation as the vehicle approaches the object, and then, completely turns off the accelerator and performs a break-on operation in preparation for sudden crossing of the object, for example, so that the vehicle passes by the object. Accordingly, the drive characteristics show how the approach degrees A1 and A2 or the risk R changes and which operation event the driver performs according to the change, when the vehicle approaches the object that is in the stop state.

FIG. 7 shows an example of the drive characteristics in the shift state to the advancing state. According to the drive characteristics, the driver sequentially starts the accelerator-off operation as the vehicle approaches the object, and then, completely turns off the accelerator in preparation for sudden crossing of the object, for example, so that the vehicle passes by the object that advances. Accordingly, the drive characteristics show how the approach degrees A1 and A2 or the risk R changes and which operation event the driver performs according to the change, when the vehicle approaches the object that is in the shift state to the advancing state.

FIG. 8 shows an example of the drive characteristics in the shift state to the crossing state. According to the drive characteristics, if the object starts the crossing, the driver sequentially starts the accelerator-off operation, completely turns off the accelerator, and then, performs the brake-on operation, and if the object finishes the crossing, the vehicle increases the velocity and passes by the object. Accordingly, the drive characteristics show how the approach degrees A1 and A2 or the risk R changes and which operation event the driver performs according to the change, when the vehicle approaches the object that is in the shift state to the crossing state.

Returning to the description of FIG 4, the drive characteristic storage unit 15 stores the generated drive characteristics in association with the determination result in the encounter state (S25). That is, in particular, the drive characteristics are stored in association with the movement state of the object, and may be stored in association with the type of the object, the positional relationship with the object, and the driving environment during an encounter as necessary.

The drive characteristic storage unit 15 rejects inappropriate drive characteristics among the drive characteristics stored in association with the encounter state (S26). When rejecting the drive characteristics, an abnormal value is rejected based on an intermediate value and a most frequent value of the drive characteristics for each encounter state. This rejection is performed to store the drive characteristics with high accuracy in consideration of properties of the drive characteristics that vary according to the encounter state.

In the rejection of the drive characteristics, for example, an abnormal value test such as a Smimov-Grubbs rejection test, a Thompson rejection test, or a Masuyama rejection test is used. For example, in the Smirnoff-Grubbs rejection test, first, a significance level α of data is calculated, and a coefficient k depending on the number n of pieces of data is obtained by a rejection test table. Then, a test statistical amount T is calculated by Formula (3). Further, if k<T, the data at the significance level α is considered to be abnormal values.

$$T = \{\text{data} - \text{sample average}\} / \{\text{the square root of sample covariance}\} \quad \ldots(3)$$

If the drive characteristics are stored, the assist map setting unit 16 statistically processes the stored drive characteristics to set a drive assist map (S27). The assist map setting unit 16 sets or updates the drive assist map when new drive characteristics are added or when inappropriate drive characteristics are rejected.

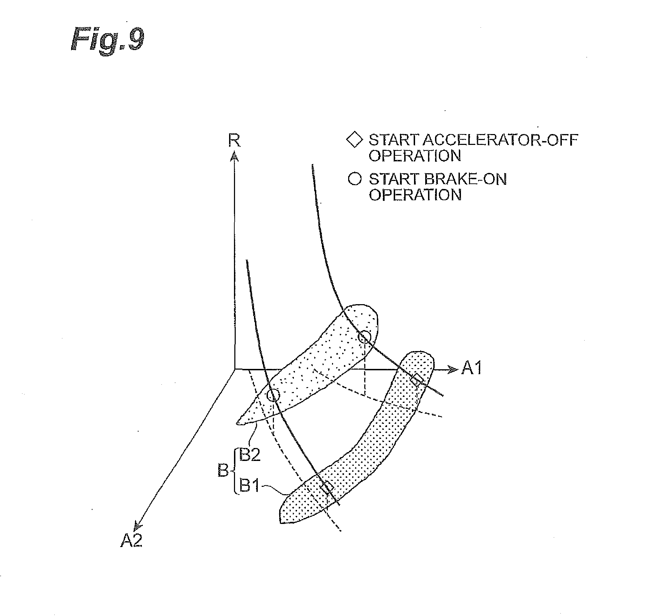

FIG. 9 is a diagram illustrating an example of the drive assist map. As shown in FIG. 9, the drive assist map is set by plotting the stored drive characteristics in a coordinate space defined by the first approach degree A1, the second approach degree A2, and the risk R. The respective plotted drive characteristics represent the relationship between the first approach degree A1, the second approach degree A2 and the risk R, and the occurrence of the operation event. For ease of display, two groups of drive characteristics are plotted in FIG 9, but actually, multiple types of drive characteristics are plotted.

In the drive assist map, spatial boundary surfaces B including plots indicating occurrence timings of the same operation event in plural types of drive characteristics are set. The boundary surfaces B are set using a mean shift principle which is a robust data analysis method using Kernel density estimation, for example. The boundary surfaces B represent timings when the corresponding operation events are normally performed by the driver.

FIG. 9 shows a boundary surface B1 indicating a starting timing of the accelerator-off operation and a boundary surface B2 indicating a starting timing of the brake-on operation. However, in the drive assist map, for example, boundary surfaces indicating occurrences of various operation events such as starting of the steering operation, or execution of the accelerator operation, the brake operation or the steering operation by a predetermined amount may be set.

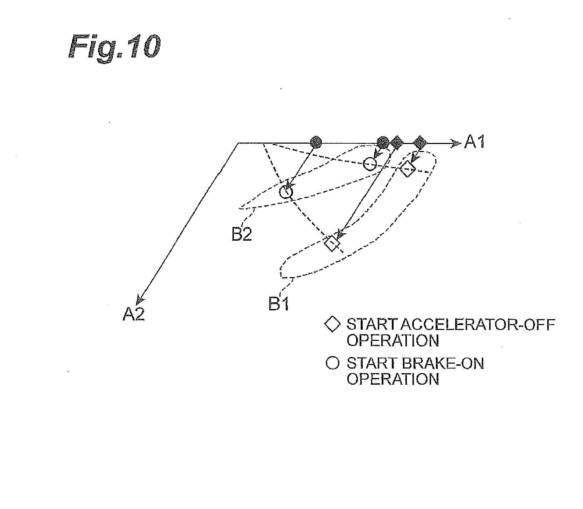

In the drive assist map, the change in the second approach degree A2 is emphasized for display compared with the first approach degree A1. FIG. 10 is a diagram illustrating setting of coordinate axes of the second approach degree A2. In FIG. 10, occurrence timings before the emphasized display are indicated by black circles and black diamonds, and occurrence timings after the emphasized display are indicated by white circles and white diamonds.

Between the vehicle travel direction and the direction that intersects the vehicle travel direction, there is a possibility that a sensory sensitivity of the driver with respect to the approaching degree is different or an occurrence timing of the operation event is different according to the encounter state. Thus, as shown in FIG. 10, the change in the second approach degree A2 is evaluated as being large by increasing the second approach degree A2 by a times (a>1). Thus, the movement of the object in the direction that intersects the vehicle travel direction is detected with high accuracy, and thus, the occurrence timing of the operation event is estimated with high accuracy.

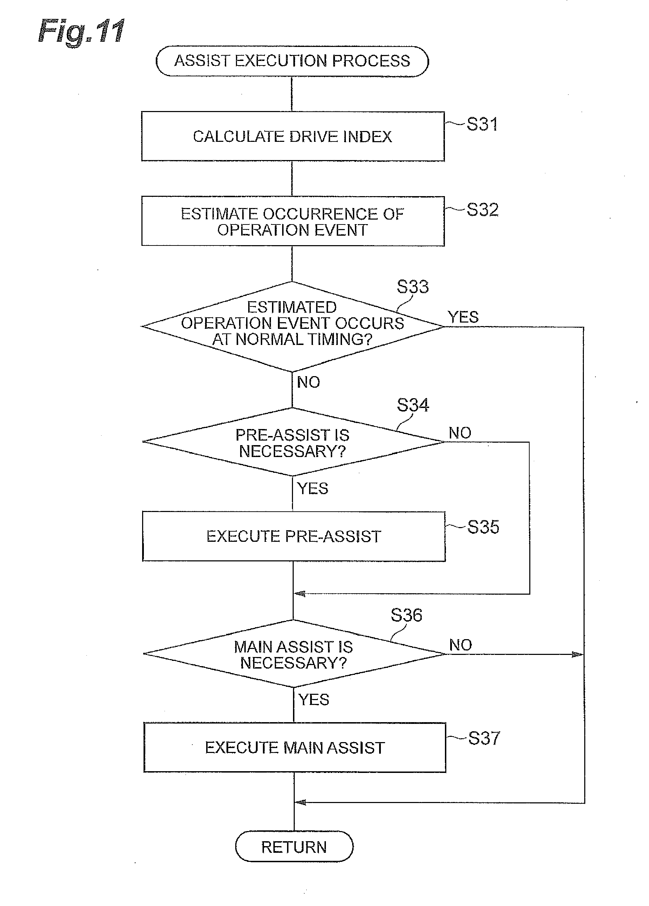

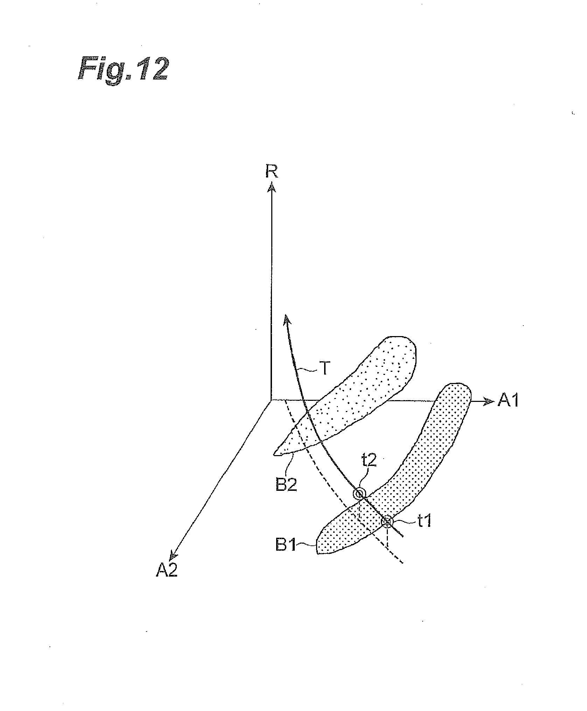

Next, an assist execution process will be described with reference to FIGS. 11 and 12. FIG. 11 is a flowchart illustrating the assist execution process. FIG. 11 shows details of the processes of S14 to S16 in FIG. 3.

The assist execution process is executed when the encounter state suitable for execution of the drive assist occurs. The encounter state suitable for execution of the drive assist refers to an encounter state where the occurrence of the operation event can be estimated with a predetermined accuracy using the drive assist map, and refers to an encounter state similar to the encounter state suitable for storage of the above-described drive characteristics, for example.

As shown in FIG. 11, if the assist execution process is started, the drive information acquisition unit 12 acquires drive information, and the drive index calculator 13 calculates drive indexes based on the drive information (S31). The drive index calculator 13 calculates the first and second approach degrees A1 and A2 indicating the approach degrees of the vehicle with respect to the object, the risk R indicating the degree of collision risk between the vehicle and the object, and the time taken for arrival, based on movement information.

If the drive indexes are calculated, the drive assist control unit 17 applies current values of the drive indexes to the drive assist map to estimate the occurrence of the operation event (S32). The drive assist control unit 17 estimates the occurrence of the operation event based on the positional relationship between the drive indexes and the boundary surfaces on the drive assist map. That is, on the drive assist map, when a coordinate position indicated by the current values of the drive indexes is included in a range of coordinate positions of a boundary surface indicating an occurrence timing of a specific operation event, the occurrence of the operation event is estimated.

The drive assist control unit 17 determines whether the estimated operation event occurs at the normal timing based on the detection results of the various sensors 21 (S33). That is, the drive assist control unit 17 determines whether the operation event actually occurs while the coordinate position indicated by the current values of the drive indexes is included in the range of the coordinate positions of the boundary surface indicating the occurrence timing of the specific operation event.

FIG. 12 is a diagram illustrating a determination example of the occurrence of the operation event. In FIG. 12, the drive assist map shown in FIG. 9 and a track T of the coordinate position indicated by the drive indexes are shown. As shown in FIG. 12, at a time point t1, the coordinate position indicated by the drive indexes is included in a range of a boundary surface B1 indicating an accelerator-off start occurrence timing, but at a time point t2, the coordinate position is deviated from the range of the boundary surface B 1.

Thus, at the time point t1, the occurrence of an accelerator-off start operation event is estimated. Further, when the same operation event actually occurs before the time point t2, it is determined that the same operation event occurs at the normal timing. On the other hand, when the same operation event does not actually occur, it is not determined that the operation event occurs at the normal timing.

Returning to the description of FIG. 11, when it is not determined that the estimated operation event is generated at the normal timing, for example, the drive assist control unit 17 determines the necessity of the pre-assist or the main assist. Instead of determining the necessity of the pre-assist or the main assist, an assist content change such as acceleration or suppression of the pre-assist or the main assist may be performed.

The drive assist control unit 17 determines whether the pre-assist is necessary (S34). For example, when the time TTC taken for arrival at the current time point is equal to or greater than a margin threshold value (for example, about 4 seconds), the drive assist control unit 17 determines that the pre-assist is necessary. Further, when it is determined that the pre-assist is necessary, the drive assist control unit 17 executes the pre-assist with respect to the driver of the vehicle (S35).

The pre-assist may be performed to alert the occurrence possibility of a dangerous state to the driver of the vehicle, or may be performed to urge the driver to perform a normal drive operation, for example. The pre-assist is executed when an operation event that normally occurs before the dangerous state occurs, for example, starting of the accelerator-off operation or the like does not occur at the normal timing.

Further, the drive assist control unit 17 determines whether the main assist is necessary (S36). The drive assist control unit 17 performs prediction of collision between the vehicle and the object based on the first and second approach degrees A1 and A2, for example. When it is determined that a collision possibility is high, the drive assist control unit 17 determines that the main assist is necessary. Further, when it is determined that the main assist is necessary, the drive assist control unit 17 executes at least one of alerting assist, control assist and safety assist for avoiding collision (S37). The main assist is executed when an operation event that normally occurs after the dangerous state occurs, for example, starting of the brake-off operation or the like does not occur at the normal timing.

As described above, according to the first embodiment of the invention, the drive assist is executed based on the second approach degree A2 in the direction that intersects the vehicle travel direction, calculated based on the relative velocity between the vehicle and the object. Thus, the movement of the object can be ascertained even in a state where the intersection point is not present or a state where the velocity of the object is almost zero. Accordingly, various movements of the object can be appropriately detected, so that the assist depending on the movements of the object can be executed without giving the driver an uncomfortable feeling.

In the above description, a case where the model indicating the temporal change in the relative jerk is used for the risk R is described, but a model indicating a temporal change in the relative distance, the relative velocity or the relative acceleration may be used. Further, as the risk R, risk potential areas indicating future collision risk possibilities may be respectively set around the vehicle and around the object, and the degree of collision risk between the vehicle and the object may be shown based on temporal changes of two risk potential areas.

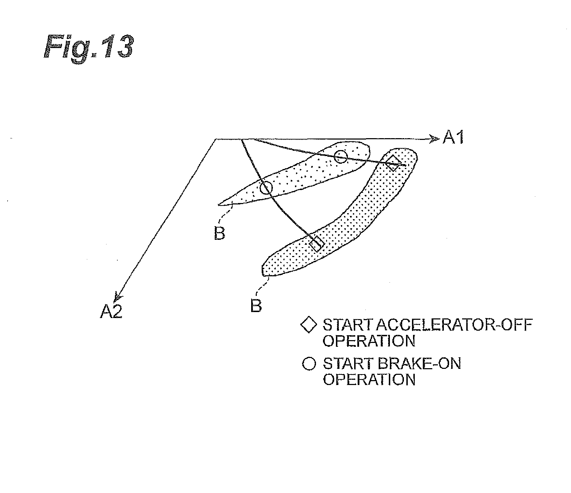

Next, a drive assist device and a drive assist method according to a second embodiment of the invention will be described with reference to FIG. 13. The second embodiment is different from the first embodiment in that only approach characteristics of the first and second approach degrees A1 and A2 are used as the drive characteristics. Hereinafter, repetitive description regarding the same configuration as that of the first embodiment will not be repeated.

FIG. 13 is a diagram illustrating an example of a drive assist map used in the second embodiment. As shown in FIG. 13, the drive assist map is set by plotting the stored drive characteristics in a coordinate plane defined by the first approach degree A1 and the second approach degree A2. The respective plotted drive characteristics represent the relationship between the first approach degree A1 and the second approach degree A2, and the occurrence of the operation event.

In the drive assist map, boundary surfaces B including plots indicating occurrence timings of the same operation event in plural types of drive characteristics are set. The boundary surfaces B represent timings when the corresponding operation events are normally performed by the driver.

In the map setting process, drive indexes including the first and second approach degrees A1 and A2 are calculated based on movement information, and drive characteristics (approach characteristics) are generated by associating the drive indexes with operation information for storage. Further, the drive assist map shown in FIG 13 is set based on the stored drive characteristics.

In the assist execution process, drive indexes at a current time point are applied to the drive assist map shown in FIG. 13 to estimate that the operation event occurs. It is determined whether the estimated operation event occurs at the normal timing based on the operation information. When it is not determined that the operation event occurs at the normal timing, the drive assist is executed.

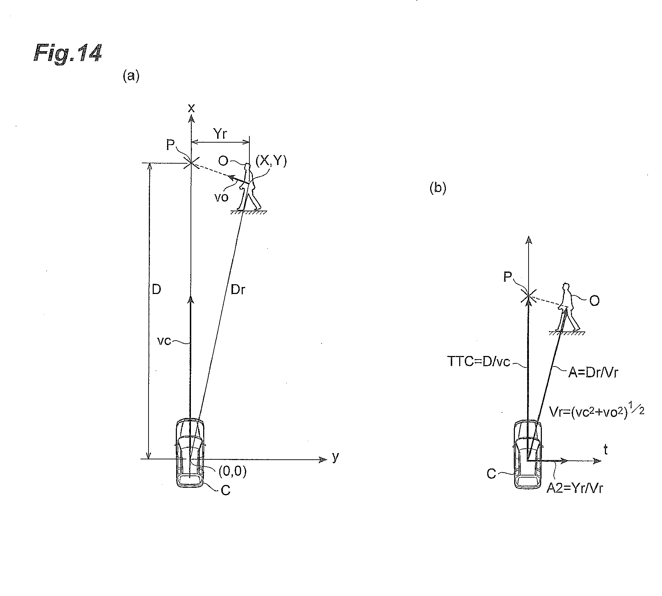

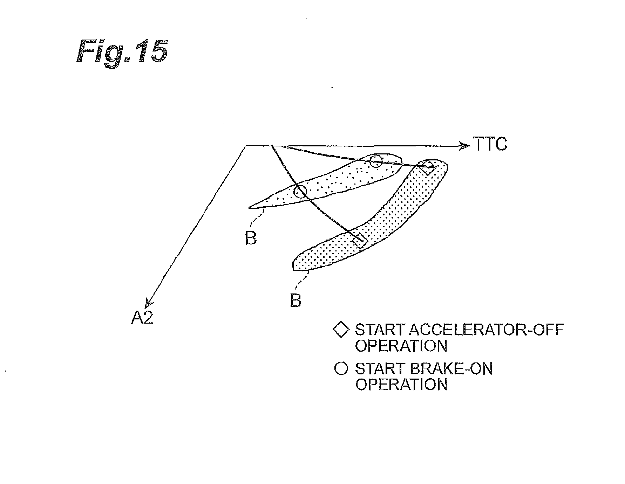

Next, a drive assist device and a drive assist method according to a third embodiment of the invention will be described with reference to FIGS. 14 and 15. The third embodiment is different from the second embodiment in that the collision time TTC is used as the first approach degree A1.

FIG. 14 is a diagram illustrating drive indexes used in the third embodiment. As shown in FIG. 14, as the drive index, a time TTC taken for arrival of a vehicle C at a point P where a path of the vehicle C and a path of an object O intersect each other is calculated as the first approach degree A1, and the second approach degree A2 indicating the approach degree of the vehicle C with respect to the object O is calculated. The time TTC taken for arrival is obtained by dividing a distance D from the vehicle C to the intersection point P by a vehicle velocity vc of the vehicle. The second approach degree A2 is obtained based on a relative distance Yr between the vehicle C and the object O in the direction that intersects the vehicle travel direction and a relative velocity Vr between the vehicle C and the object O, similar to the first and second embodiments.

The drive characteristics include an approach characteristic indicating a characteristic based on the relationship between the time TTC taken for arrival and the second approach degree A2, and the operation information. The approach characteristic is a characteristic in which the time TTC taken for arrival and the second approach degree A2, and the operation information are associated based on elapsed time during an encounter, and represents how the operation event occurs according to the change in the time TTC taken for arrival and the second approach degree A2.

FIG. 15 is a diagram illustrating an example of a drive assist map used in a third embodiment. As shown in FIG. 15, the drive assist map is set by plotting the stored drive characteristics in a coordinate plane defined by the time TTC taken for arrival and the second approach degree A2. The respective plotted drive characteristics represent the relationship between the time TTC taken for arrival and the second approach degree A2, and the occurrence of the operation event.

In the drive assist map, boundary surfaces B including plots indicating occurrence timings of the same operation event in plural types of drive characteristics are set. The boundary surfaces B represent timings when the corresponding operation events are normally performed by the driver.

In the map setting process, drive indexes including the time TTC taken for arrival and the second approach degree A2 are calculated based on movement information, and drive characteristics (approach characteristics) are generated by associating the drive indexes with operation information for storage. Further, the drive assist map shown in FIG. 15 is set based on the stored drive characteristics.

In the assist execution process, drive indexes at a current time point are applied to the drive assist map shown in FIG. 15 to estimate the occurrence of the operation event. It is determined whether the estimated operation event occurs at the normal timing based on the operation information. When it is not determined that the operation event occurs at the normal timing, the drive assist is executed.

Next, an alerting device and an alerting method according to a fourth embodiment of the invention will be described. The fourth embodiment is different from the other embodiments in that alerting of a travel state or the like of a vehicle is executed outside of the vehicle. The alerting device is mounted on the vehicle, and alerts an occurrence possibility of a dangerous state to a pedestrian outside the vehicle, a bicycle rider or the like before the vehicle gets into the dangerous state. As the alerting, for example, an operation of a horn, blinking of a light, inter-vehicle communication or the like is used. Such an alerting operation is executed when an operation event that normally occurs before the dangerous state occurs, for example, starting of the accelerator-off operation or the like does not occur at the normal timing.

The above-described embodiments are preferred embodiments of the drive assist device and method, the collision prediction device and method, and the alerting device and method according to the invention, and the drive assist device and method, the collision prediction device and method, and the alerting device and method according to the invention are not limited to the described embodiments. The drive assist device and method, the collision prediction device and method, and the alerting device and method according to the invention may include modifications or other applications of the drive assist device and method, the collision prediction device and method, and the alerting device and method according to the described embodiments in a range without departing from the concept of the invention disclosed in claims.

For example, in the description of the first to fourth embodiments, a case where the configurations realized by the ECU 10 are disposed inside the vehicle is described. However, at least a part of these configurations may be disposed outside the vehicle as a device capable of communicating with the vehicle, such as a server device provided in an information processing center.

Further, in the description of the third embodiment, a case where the collision time TTC is used as the first approach degree A1 is described, but a drive index corresponding to the risk R may be used as the first approach degree A1. In this case, the first approach degree A1 is a value calculated based on at least one of the relative distance, the relative velocity, and the relative acceleration and the relative jerk between the vehicle and the object.

Reference Signs List

10    ECU
11    ENCOUNTER STATE DETERMINATION UNIT
12    DRIVE INFORMATION ACQUISITION UNIT
13    DRIVE INDEX CALCULATOR
14    DRIVE CHARACTERISTIC GENERATOR
15    DRIVE CHARACTERISTIC STORAGE UNIT
16    ASSIST MAP SETTING UNIT
17    DRIVE ASSIST CONTROL UNIT
21    SENSOR
22    HMI
23    ACTUATOR

**Claims**

1.  A drive assist device comprising:

    an approach degree calculator configured to calculate a first approach degree of a vehicle to an object in a vehicle travel direction and to calculate a second approach degree of the vehicle to the object in a direction that intersects the vehicle travel direction based on a relative velocity between the vehicle and the object; and
    a drive assist control unit configured to control execution of drive assist based on the first approach degree and the second approach degree.

2.  The drive assist device according to claim 1,
    wherein the second approach degree is a value calculated based on a relative distance between the vehicle and the object in the direction that intersects the vehicle travel direction and the relative velocity between the vehicle and the object.

3.  The drive assist device according to claim 2,
    wherein the second approach degree is a value obtained by dividing the relative distance between the vehicle and the object in the direction that intersects the vehicle travel direction by the relative velocity between the vehicle and the object.

4.  The drive assist device according to claim 3,
    wherein the first approach degree is a value obtained by dividing the relative distance between the vehicle and the object in the vehicle travel direction by the relative velocity between the vehicle and the object.

5. The drive assist device according to claim 4,
wherein the first approach degree is a component value in the vehicle travel direction in a relative approach degree obtained by dividing the relative distance between the vehicle and the object by the relative velocity between the vehicle and the object, and the second approach degree is a component value in the direction that intersects the vehicle travel direction in the relative approach degree.

6. The drive assist device according to any one of claims 1 to 3,
wherein the first approach degree is a time taken for arrival of the vehicle at a point where a path of the vehicle and a path of the object intersect each other.

7. The drive assist device according to any one of claims 1 to 3,
wherein the first approach degree is a value obtained based on at least one of the relative distance, the relative velocity, a relative acceleration or a relative jerk between the vehicle and the object.

8. The drive assist device according to any one of claims 1 to 7,
wherein the drive assist control unit controls the execution of the drive assist by applying the first approach degree and the second approach degree to a predetermined map.

9. The drive assist device according to any one of claims 1 to 6,
wherein the drive assist control unit controls the execution of the drive assist based on a risk obtained based on the first approach degree, the second approach degree, and at least one of the relative distance, the relative velocity, a relative acceleration or a relative jerk between the vehicle and the object.

10. The drive assist device according to claim 9,
wherein the drive assist control unit controls the execution of the drive assist by applying the first approach degree, the second approach degree and the risk to a predetermined map.

11. The drive assist device according to claim 8,
wherein the drive assist control unit estimates an operation timing of a specific driving operation for changing the velocity or acceleration of the vehicle based on the first approach degree and the second approach degree.

12. The drive assist device according to claim 10,
wherein the drive assist control unit estimates an operation timing of a specific driving operation for changing the velocity or acceleration of the vehicle based on the first approach degree, the second approach degree and the risk.

13. The drive assist device according to claim 11 or 12,
wherein the drive assist control unit controls the execution of the drive assist based on the operation timing or an operation amount of the specific driving operation.

14. The drive assist device according to claim 13,
wherein the specific driving operation is an accelerator operation or a brake operation.

15. The drive assist device according to claim 14,
wherein the specific driving operation is an accelerator-off operation or a brake-on operation.

16. A drive assist method comprising:

calculating a first approach degree of a vehicle to an object in a vehicle travel direction and calculating a second approach degree of the vehicle to the object in a direction that intersects the vehicle travel direction based on a relative velocity between the vehicle and the object; and
controlling execution of drive assist based on the first approach degree and the second approach degree.

17. A collision prediction device comprising:

an approach degree calculator configured to calculate a first approach degree of a vehicle to an object in a vehicle travel direction and to calculate a second approach degree of the vehicle to the object in a direction that intersects the vehicle travel direction based on a relative velocity between the vehicle and the object; and a collision prediction unit configured to perform prediction of collision between the vehicle and the object based on the first approach degree and the second approach degree.

**18.** A collision prediction method comprising:

calculating a first approach degree of a vehicle to an object in a vehicle travel direction and calculating a second approach degree of the vehicle to the object in a direction that intersects the vehicle travel direction based on a relative velocity between the vehicle and the object; and performing prediction of collision between the vehicle and the object based on the first approach degree and the second approach degree.

**19.** An alerting device comprising:

an approach degree calculator configured to calculate a first approach degree of a vehicle to an object in a vehicle travel direction and to calculate a second approach degree of the vehicle to the object in a direction that intersects the vehicle travel direction based on a relative velocity between the vehicle and the object; and an alerting unit configured to alert a traveling state of the vehicle to outside of the vehicle based on the first approach degree and the second approach degree.

**20.** An alerting method comprising:

calculating a first approach degree of a vehicle to an object in a vehicle travel direction and calculating a second approach degree of the vehicle to the object in a direction that intersects the vehicle travel direction based on a relative velocity between the vehicle and the object; and alerting a traveling state of the vehicle to outside of the vehicle based on the first approach degree and the second approach degree.

## Fig.1

```
                            ┌────────────────────────────────┐
                            │            ECU            ~10   │
         ~21                │  ┌──────────────────────────┐   │
┌──────────────────┐       │  │    ENCOUNTER STATE       ~11 │
│                  │       │  │  DETERMINATION UNIT      │   │
│     SENSOR       │──────→│  └──────────────────────────┘   │
│                  │       │  ┌──────────────────────────┐   │
└──────────────────┘       │  │   DRIVE INFORMATION      ~12 │
                            │  │   ACQUISITION UNIT       │   │
                            │  └──────────────────────────┘   │
                            │  ┌──────────────────────────┐   │
                            │  │  DRIVE INDEX CALCULATOR   ~13 │
                            │  └──────────────────────────┘   │
                            │  ┌──────────────────────────┐   │
                            │  │   DRIVE CHARACTERISTIC    ~14 │
                            │  │       GENERATOR          │   │
                            │  └──────────────────────────┘   │
                            │  ┌──────────────────────────┐   │
                            │  │   DRIVE CHARACTERISTIC    ~15 │
                            │  │      STORAGE UNIT        │   │           ~22
                            │  └──────────────────────────┘   │    ┌──────────────┐
                            │  ┌──────────────────────────┐   │    │              │
                            │  │  ASSIST MAP SETTING UNIT  ~16 │───→│     HMI      │
                            │  └──────────────────────────┘   │    │              │
                            │  ┌──────────────────────────┐   │    └──────────────┘
                            │  │                           ~17 │          ~23
                            │  │ DRIVE ASSIST CONTROL UNIT │───┼───→┌──────────────┐
                            │  └──────────────────────────┘   │    │   ACTUATOR    │
                            │                                │    └──────────────┘
                            └────────────────────────────────┘
```

# Fig.2

(a)

(b)

*Fig.3*

```
        ┌─────────────┐
        │    START    │
        └─────────────┘
               │
        ┌──────────────────────────┐
        │  CALCULATE DRIVE INDEX   │──S11
        └──────────────────────────┘
               │
        ┌──────────────────────────┐
        │  GENERATE AND STORE DRIVE │──S12
        │     CHARACTERISTIC        │
        └──────────────────────────┘
               │
        ┌──────────────────────────┐
        │   SET DRIVE ASSIST MAP   │──S13
        └──────────────────────────┘
               │
        ┌──────────────────────────┐
        │   ESTIMATE OCCURRENCE    │──S14
        │   OF OPERATION EVENT     │
        └──────────────────────────┘
               │
              S15
          ╱─────────╲
         ╱ OPERATION ╲          YES
        ╱ EVENT OCCURS ╲───────────────┐
        ╲ AT NORMAL    ╱                │
         ╲  TIMING?   ╱                 │
          ╲─────────╱                   │
              │ NO                      │
        ┌──────────────────────────┐    │
        │   EXECUTE DRIVE ASSIST   │──S16│
        └──────────────────────────┘    │
               │◄───────────────────────┘
        ┌─────────────┐
        │   RETURN    │
        └─────────────┘
```

# Fig.4

```
        ┌─────────────────────────────┐
        │    MAP SETTING PROCESS      │
        └─────────────────────────────┘
                      │
        ┌─────────────────────────────┐
        │    CALCULATE DRIVE INDEX    │─── S21
        └─────────────────────────────┘
                      │
        ┌─────────────────────────────┐
        │  DETERMINE ENCOUNTER STATE  │─── S22
        └─────────────────────────────┘
                      │
                   S23 │
              ╱─────────────────╲
            ╱   DRIVE CHARACTERISTIC  ╲   NO
            ╲     IS STORED?          ╱──────┐
              ╲─────────────────╱            │
                    │ YES                     │
        ┌─────────────────────────────┐      │
        │ GENERATE DRIVE CHARACTERISTIC│─── S24│
        └─────────────────────────────┘      │
                      │                        │
        ┌─────────────────────────────┐      │
        │   STORE DRIVE CHARACTERISTIC │─── S25│
        └─────────────────────────────┘      │
                      │                        │
        ┌─────────────────────────────┐      │
        │   REJECT INAPPROPRIATE       │─── S26│
        │   DRIVE CHARACTERISTIC       │      │
        └─────────────────────────────┘      │
                      │                        │
        ┌─────────────────────────────┐      │
        │     SET DRIVE ASSIST MAP     │─── S27│
        └─────────────────────────────┘      │
                      │                        │
                      │◄───────────────────────┘
                      │
              ┌───────────────┐
              │    RETURN     │
              └───────────────┘
```

Fig.5

(a)

(b)

(c)

# Fig.6

(a)

A2

◇ START ACCELERATOR-OFF OPERATION
☐ COMPLETELY TURN OFF ACCELERATOR
○ START BRAKE-ON OPERATION

A1

(b)

◇ START ACCELERATOR-OFF OPERATION
☐ COMPLETELY TURN OFF ACCELERATOR
R ○ START BRAKE-ON OPERATION

t

*Fig.7*

(a)

(b)

# Fig.8

(a)

◇ START ACCELERATOR-OFF OPERATION

□ COMPLETELY TURN OFF ACCELERATOR

○ START BRAKE-ON OPERATION

A2

P3

A1

(b)

R

◇ START ACCELERATOR-OFF OPERATION

□ COMPLETELY TURN OFF ACCELERATOR

○ START BRAKE-ON OPERATION

P4

t

*Fig.9*

◇ START ACCELERATOR-OFF OPERATION

○ START BRAKE-ON OPERATION

Fig.10

◇ START ACCELERATOR-OFF OPERATION

○ START BRAKE-ON OPERATION

**Fig.11**

```
        ( ASSIST EXECUTION PROCESS )
                     |
        [ CALCULATE DRIVE INDEX ]——S31
                     |
        [ ESTIMATE OCCURRENCE OF ]——S32
        [   OPERATION EVENT      ]
                     |
                            S33
              < ESTIMATED           >
              < OPERATION EVENT OCCURS >——YES
              < AT NORMAL TIMING?   >
                     | NO
                            S34
              < PRE-ASSIST IS >——NO
              < NECESSARY?    >
                     | YES
        [ EXECUTE PRE-ASSIST ]——S35
                     |
                            S36
              < MAIN ASSIST IS >——NO
              < NECESSARY?     >
                     | YES
        [ EXECUTE MAIN ASSIST ]——S37
                     |
              (   RETURN   )
```

*Fig.12*

Fig.13

◇ START ACCELERATOR-OFF
OPERATION

○ START BRAKE-ON
OPERATION

## Fig.14

(a)

(b)

*Fig.15*

◇ START ACCELERATOR-OFF
OPERATION

○ START BRAKE-ON
OPERATION

## INTERNATIONAL SEARCH REPORT

| International application No. |
|---|
| PCT/JP2012/079027 |

**A. CLASSIFICATION OF SUBJECT MATTER**
*B60W30/08*(2012.01)i, *B60T7/12*(2006.01)i

According to International Patent Classification (IPC) or to both national classification and IPC

**B. FIELDS SEARCHED**

Minimum documentation searched (classification system followed by classification symbols)
B60W30/08, B60T7/12

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y<br>A | JP 2010-102641 A  (Mitsubishi Electric Corp.),<br>06 May 2010 (06.05.2010),<br>paragraphs [0015] to [0018]<br>(Family: none) | 1-2,6-8,<br>16-20<br>9-10<br>3-5,11-15 |
| Y | JP 2007-182226 A  (Nissan Motor Co., Ltd.),<br>19 July 2007 (19.07.2007),<br>paragraph [0040]<br>(Family: none) | 9-10 |
| A | JP 2006-127491 A  (Yamaha Motor Co., Ltd.),<br>18 May 2006 (18.05.2006),<br>claim 9<br>(Family: none) | 1-20 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 November, 2012 (30.11.12) | 11 December, 2012 (11.12.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2012/079027 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | WO 2010/119860 A1 (Hitachi Automotive Systems, Ltd.), 21 October 2010 (21.10.2010), entire text; all drawings & JP 2010-250501 A | 1-20 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008308024 A